# EUROPÄISCHE PATENTSCHRIFT

(11) **EP 1 519 082 B1**
(45) Veröffentlichungstag und Bekanntmachung des Hinweises auf die Patenterteilung: **12.09.2007**
(21) Anmeldenummer: 03021911.7
(22) Anmeldetag: 29.09.2003
(51) Int. Cl.: F16H 61/12

(54) **Ansteuereinrichtung für hydraulisch betätigbare Kupplungen sowie Verfahren zur Ansteuerung von hydraulisch betätigbarer Kupplungen**
Control device and method for hydraulically operated clutches
Dispositif de commande et procédé pour embrayages commandés hydrauliquement

(43) Veröffentlichungstag der Anmeldung: 30.03.2005
(73) Patentinhaber: BorgWarner Inc., Auburn Hills, MI 48326 (US)
(72) Erfinder: Ebinger, Günter, Dr., 76684 Östringen (DE); Burmeister, Matthias, 69121 Heidelberg (DE); Sandstrom, Eric, Oxford Michigan 48371 (US)
(74) Vertreter: Neunert, Peter Andreas

(56) Entgegenhaltungen:
- EP-A- 0 803 663
- EP-A- 0 947 742
- US-A- 5 383 379
- US-A- 5 816 977
- US-A- 5 919 108
- US-A1- 2003 083 169
- US-B1- 6 527 670

## Beschreibung

Die Erfindung betrifft eine Ansteuereinrichtung für eine erste und eine zweite hydraulisch betätigbare Kupplung eines Doppelkupplungsgetriebes eines Kraftfahrzeugs gemäß dem Oberbegriff des Patentanspruchs 1 sowie ein Verfahren zur Ansteuerung einer ersten und einer zweiten hydraulisch betätigbaren Kupplung eines Doppelkupplungsgetriebes eines Kraftfahrzeugs gemäß dem Oberbegriff des Anspruchs 13.

Aus dem betriebsintern bekannten Stand der Technik und insbesondere auch aus der US 5,919,108 sind Ansteuereinrichtungen für eine erste und zweite hydraulisch betätigbare Kupplung eines Doppelkupplungsgetriebes eines Kraftfahrzeugs bekannt. Diese weisen zwei Kupplungsventile zum hydraulischen Betätigen der beiden Kupplungen sowie einen Handschieber oder dergleichen auf.

Das erste Kupplungsventil zum hydraulischen Betätigen der ersten Kupplung liegt in einem ersten durch Kanäle gebildeten Hydraulikflüssigkeit führenden Pfad zu der ersten Kupplung und öffnet bzw. schließt diesen ersten Pfad zu der ersten Kupplung in Abhängigkeit von der jeweiligen Ventilstellung.

In entsprechender Weise liegt das zum hydraulischen Betätigen der zweiten Kupplung vorgesehene zweite Kupplungsventil in einem zweiten durch Kanäle gebildeten Hydraulikflüssigkeit führenden Pfad zu der zweiten Kupplung. Auch dieses zweite Kupplungsventil ist in der Lage, diesen zweiten Pfad zu der zweiten Kupplung zu öffnen oder zu schließen.

Der Handschieber lässt in Abhängigkeit von einer Position eines Fahrbereichswählhebels, zum Beispiel Drive, Neutral, Reverse oder Parking, eine Betätigung der jeweiligen Kupplung aufgrund einer Betätigung des zugeordneten Kupplungsventils zu indem er die Hydraulikflüssigkeitskanäle zu den Kupplungen freigibt oder er unterbindet eine entsprechende Betätigung, indem er die Hydraulikflüssigkeitskanäle zu den Kupplungen schließt.

Das in Abhängigkeit von einer Position des Fahrbereichswählhebels den ersten und/oder zweiten Pfade öffnende oder schlie-βende Ventil kann durch die Wahl einer entsprechenden Position des Fahrbereichswählhebels - üblicherweise handelt es sich hierbei um die Reverse-Position - in eine Ventilstellung verbracht werden, in der der erste Pfad geöffnet und der zweite Pfad geschlossen ist.

Fällt bei diesem Doppelkupplungsgetriebe ein Kupplungsventil aus, so kann im gewählten Beispiel das Kraftfahrzeug immer noch mit der verbleibenden Kupplung und einer eingeschränkten Anzahl Gänge gefahren werden. Dies gilt jedoch nicht für den Rückwärtsgang, den es nur einmal gibt.

Die Aufgabe der Erfindung liegt nunmehr darin, eine Ansteuereinrichtung für eine erste und eine zweite hydraulisch betätigbare Kupplung eines Doppelkupplungsgetriebes eine Kraftfahrzeugs der gattungsgemäßen Art derart auszubilden und weiterzubilden, dass stets ein Vorwärts- und Rückwärtsfahren möglich ist, auch wenn das eigentlich für einen entsprechenden Betrieb vorgesehene Kupplungsventil ausgefallen ist. Eine weitere Aufgabe der Erfindung liegt darin, ein entsprechendes Verfahren zur Ansteuerung einer ersten und einer zweiten hydraulisch betätigbaren Kupplung eines Doppelkupplungsgetriebes eines Kraftfahrzeugs der gattungsgemäßen Art vorzustellen, welches es ermöglicht, mit dem Kraftfahrzeug auch dann vorwärts und rückwärts fahren zu können, obwohl ein eigentlich für einen entsprechenden Betrieb vorgesehenes Kupplungsventil ausgefallen ist.

Diese Aufgabe wird durch eine Ansteuereinrichtung mit den Merkmalen des Patentanspruchs 1 sowie durch ein Verfahren mit den Merkmalen des Patentanspruchs 13 erfindungsgemäß gelöst.

Vorteilhafte Ausführungen und Weiterbildungen der Erfindung sind in den Unteransprüchen angegeben.

Bei einer Ansteuereinrichtung der gattungsgemäßen Art ist erfindungsgemäß ein Multiplexventil vorgesehen, welches bei Ausfall des ersten Kupplungsventils die Kanäle derart miteinander verbindet, dass das zweite Kupplungsventil in dem ersten Pfad liegt und diesen ersten Pfad öffnet oder schließt.

Verfahrensmäßig wird diese Aufgabe dadurch gelöst, dass die Kanäle bei Ausfall des ersten Kupplungsventil derart miteinander verbunden werden, dass das zweite Kupplungsventil in dem ersten Pfad liegt und diesen ersten Pfad öffnet oder schließt.

In einer bevorzugten Ausführungsvariante ist weiter erfindungsgemäß vorgesehen, dass das Multiplexventil eine Selbsthalteeinrichtung aufweist. Diese Selbsthalteeinrichtung ist dazu vorgesehen, das Multiplexventil in der die Kanäle miteinander verbindenden Ventilstellung, in der das zweite Kupplungsventil in dem ersten Pfad liegt und diesen Pfad öffnet oder schließt zu halten. Das Multiplexventil braucht also nur aufgrund eines den Ausfall des ersten Kupplungsventils meldenden Signals in die entsprechende Ventilstellung verbracht werden, wo es selbstständig verbleibt.

In einer besonderen Ausgestaltung dieser Variante ist vorgesehen, dass die Selbsthalteeinrichtung nur dann wirksam ist, wenn der Druck der Hydraulikflüssigkeit einen vorgebbaren Schwellwert überschreitet. Durch diese Ausführungsvariante ist sichergestellt, dass ein Notbetrieb nur dann stattfindet, wenn ein ausreichender hydraulischer Druck, insbesondere der erforderliche Mindestdruck zum Betätigen der jeweiligen Kupplungen, vorhanden ist und eine unbeabsichtigte Betätigung ausgeschlossen ist.

Vorzugsweise ist das Multiplexventil in der nachfolgend beschriebenen Art und Weise aufgebaut: Das Multiplexventil hat einen in einem wenigstens 13 Schlitze aufweisenden Steuergehäuse geführten Kolben mit fünf öffnenden und vier schließenden Kolbenabschnitten. Der Kolben ist dabei wahlweise in eine erste Position verbringbar, in welcher der erste öffnende Kolbenabschnitt nur den ersten Schlitz, der zweite öffnende Kolbenabschnitt den vierten und fünften Schlitz, der dritte öffnende Kolbenabschnitt den siebenten und achten Schlitz, der vierte öffnende Kolbenabschnitt den neunten und zehnten Schlitz und der fünfte öffnende Kolbenabschnitt den zwölften und dreizehnten Schlitz übergreift oder in eine zweite Position, in welcher der erste öffnende Kolbenabschnitt den zweiten und dritten Schlitz, der zweite öffnende Kolbenabschnitt den fünften und sechsten Schlitz, der dritte öffnende Kolbenabschnitt den achten und neunten Schlitz, der vierte öffnende Kolbenabschnitt den zehnten und elften Schlitz und der fünfte öffnende Kolbenabschnitt den dreizehnten Schlitz übergreift. Weiterhin ist der zweite Schlitz über einen Kanal mit dem zwölften Schlitz, der dritte Schlitz über einen Kanal mit einem Hydraulikflüssigkeitsbehälter mit Systemdruck verbunden. Der vierte Schlitz ist weiterhin in der ersten Fahrbereichswählhebelposition mit einem offenen Behälter, der fünfte Schlitz mit dem Eingang des zweiten Kupplungsventils, der sechste Schlitz mit dem Eingang des ersten Kupplungsventils, der siebente Schlitz mit dem Ausgang des ersten Kupplungsventils, der achte Schlitz mit dem zu der ersten Kupplung führenden Kanal, der neunte Schlitz mit dem Ausgang des zweiten Kupplungsventils, der zehnte Schlitz mit dem zu der zweiten Kupplung führenden Kanal und der elfte und dreizehnte Schlitz jeweils mit dem offenen Behälter verbunden.

Die Betätigung des Multiplexventils der vorstehend beschriebenen Ausführungsart erfolgt vorzugsweise dadurch, dass der erste Schlitz des Multiplexventils in der ersten Fahrbereichswählhebelposition mit dem Hydraulikflüssigkeitsbehälter mit Systemdruck verbindbar ist, welcher in verbundenem Zustand entgegen der Kraft einer Feder auf eine erste Stirnfläche des Kolbens wirkt und diesen dadurch in die zweite Position verbringt.

In besonderer Ausgestaltung dieser Variante ist erfindungsgemäß ein Elektromagnetventil, vorzugsweise ein elektrisch betätigbares 3/2-Wege Ein-/Aus-Ventil, zum Verbinden des ersten Schlitzes des Multiplexventiles mit dem Hydraulikflüssigkeitsbehälter mit Systemdruck vorgesehen.

Die Selbsthalteeinrichtung der vorstehend beschriebenen Art wird bei diesem zuletzt beschriebenen Multiplexventil vorzugsweise dadurch realisiert, dass der erste schließende Kolbenabschnitt eine zweite Stirnfläche aufweist. Der über den dritten Schlitz einspeisbare Systemdruck ist in der Lage, den Kolben entgegen der Kraft der vorstehend beschriebenen Feder in der zweiten vorstehend beschriebenen Position zu halten.

In besonderer Ausgestaltung der erfindungsgemäßen Ansteuereinrichtung kann ein Sicherheitsventil zum Entleeren der Kupplungen vorgesehen sein. Dieses Sicherheitsventil ermöglicht es, die Kupplungen in einen definierten Zustand zu verbringen, unabhängig davon, ob die entsprechenden Kupplungsventile ordnungsgemäß arbeiten oder nicht.

Das Sicherheitsventil ist vorzugsweise wie folgt ausgebildet: Es weist einen in einem Schlitze aufweisenden Steuergehäuse geführten Kolben mit zwei öffnenden und drei schließenden Kolbenabschnitten auf. Der Kolben ist wahlweise in eine erste Position verbringbar, in welcher der erste öffnende Kolbenabschnitt den zweiten und dritten Schlitz und der zweite öffnende Kolbenabschnitt den sechsten Schlitz übergreift oder - zum Drucklosschalten der Kupplungen - in eine zweite Position, in welcher der erste öffnende Kolbenabschnitt den dritten und vierten Schlitz und der zweite öffnende Kolbenabschnitt den siebenten und achten Schlitz übergreift.

Hydraulisch ist dieses Sicherheitsventil wie folgt mit dem Multiplexventil und den entsprechenden Kupplungen verschaltet:

Der zweite Schlitz ist über einen Kanal mit dem achten Schlitz des Multiplexventils, der dritte Schlitz ist über einen Kanal mit der ersten Kupplung, der vierte Schlitz ist über einen Kanal mit dem offenen Behälter, der fünfte Schlitz ist über einen Kanal mit dem zehnten Schlitz des Multiplexventils und der sechste Schlitz ist über einen Kanal mit dem offenen Behälter verbunden.

Vorzugsweise ist wie beim vorstehend im Detail beschriebenen Multiplexventil der erste Schlitz des Sicherheitsventils mit dem Hydraulikflüssigkeitsbehälter oder mit Systemdruck verbindbar. Dieser Systemdruck wirkt im verbundenen Zustand entgegen der Kraft einer Feder auf eine Stirnfläche des Kolbens und verbringt diesen dadurch in die zweite Position.

In einer besonders vorteilhaften Ausführungsvariante kann zum Verbinden des ersten Schlitzes des Sicherheitsventils mit Systemdruck ein Elektromagnetventil vorgesehen sein.

Zur Ansteuerung des Sicherheitsventils kann das Elektromagnetventil verwendet werden, das zur Ansteuerung des Multiplexventils dient.

Die Erfindung wird nunmehr mit Hilfe der Zeichnungen näher beschrieben. Es zeigen:
- Figur 1 :: Ein Ausführungsbeispiel einer Ansteuereinrichtung für eine erste und eine zweite hydraulisch betätigbare Kupplung eines Doppelkupplungsgetriebes eines Kraftfahrzeugs. Die Ansteuereinrichtung befindet sich im Normalbetriebszustand. Der Fahrbereichswählhebel befindet sich in der Position "Drive".
- Figur 2 :: Die Ansteuereinrichtung gemäß der Figur 1. Die Ansteuereinrichtung befindet sich im Normalbetriebszustand. Der Fahrbereichswählhebel befindet sich in der Position "Neutral".
- Figur 3 :: Die Ansteuereinrichtung gemäß den Figuren 1 und 2. Die Ansteuereinrichtung befindet sich im Normalbetriebszustand. Der Fahrbereichswählhebel befindet sich in der Position "Reverse".
- Figur 4 :: Die Ansteuereinrichtung gemäß den Figuren 1 bis 3.
Die Ansteuereinrichtung befindet sich im Normalbetriebszustand. Der Fahrbereichswählhebel befindet sich in der Position "Parking".
- Figur 5 :: Die Ansteuereinrichtung gemäß den Figuren 1 bis 4.
Die Ansteuereinrichtung befindet sich im Fehlerbetriebszustand: Das erste Kupplungsventil ist ausgefallen. Der Fahrbereichswählhebel befindet sich in der Position "Reverse". Es folgt eine Umschaltung zum ersten Kupplungsventil auf das zweite Kupplungsventil.
- Figur 6 :: Die Ansteuereinrichtung gemäß den Figuren 1 bis 5.
Die Ansteuereinrichtung befindet sich im Fehlerbetriebszustand: Das erste Kupplungsventil ist ausgefallen. Der Fahrbereichswählhebel befindet sich in der Position "Reverse". Die in der Figur 5 beschriebene Umschaltung vom ersten Kupplungsventil auf das zweite Kupplungsventil ist abgeschlossen.

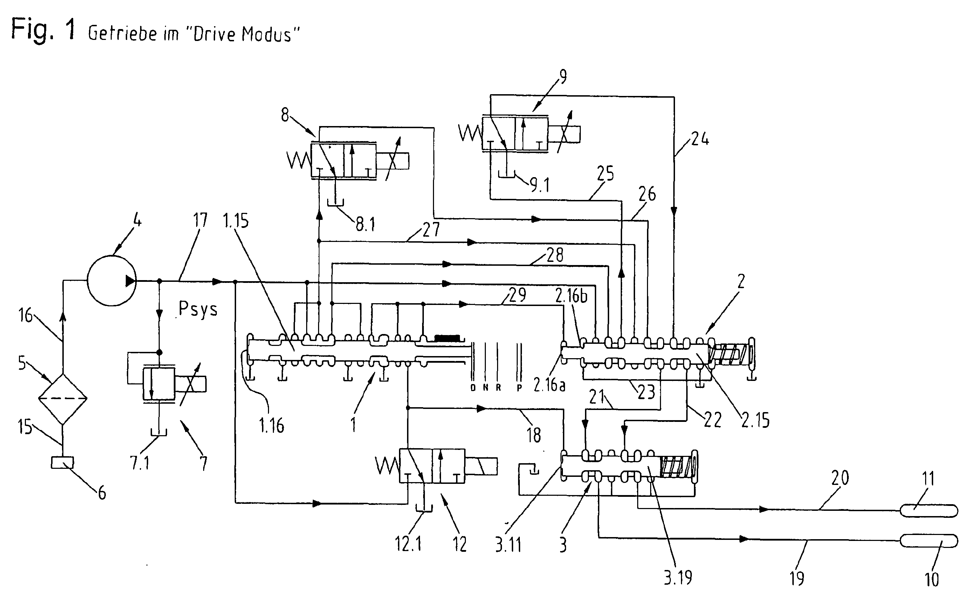

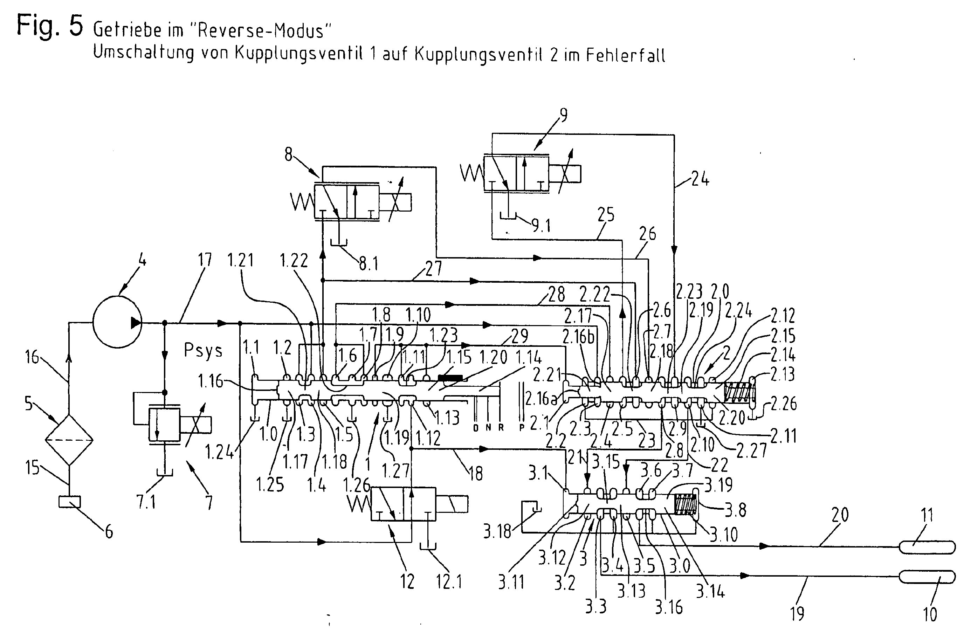

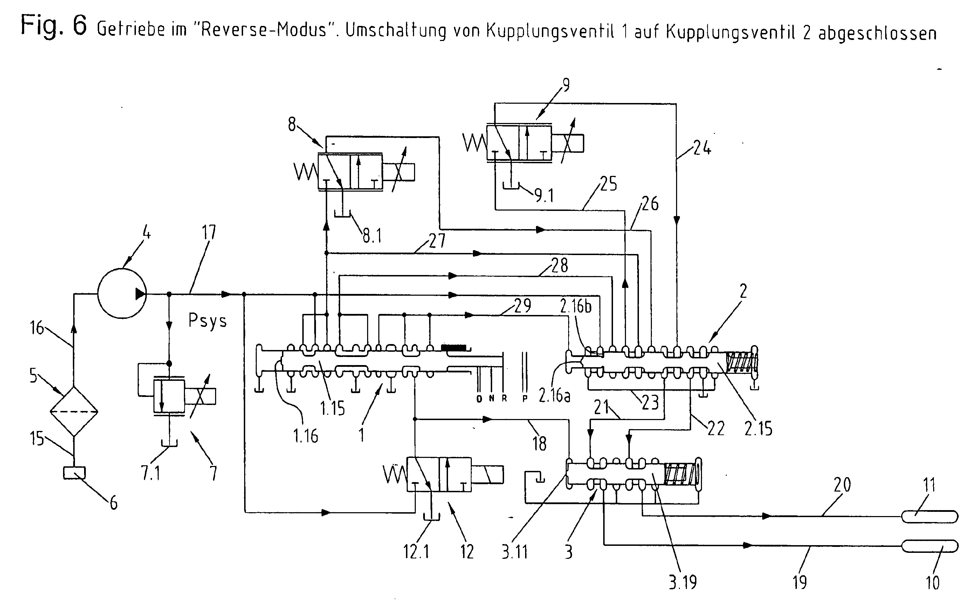

Die Figuren 1 bis 6 zeigen in Form von Prinzipschaltbildern ein Ausführungsbeispiel der erfindungsgemäßen Ansteuereinrichtung für eine erste und eine zweite hydraulisch betätigbare Kupplung 10, 11 eines Doppelkupplungsgetriebes eines Kraftfahrzeugs in unterschiedlichen Betriebszuständen. Insbesondere zeigen die Figuren 1 bis 4 die Ansteuereinrichtung bei Normalbetrieb. Die Figuren 5 und 6 zeigen die Ansteuereinrichtung im Fehlerfall, wenn ein zur Betätigung der ersten Kupplung 10 vorgesehenes erstes Kupplungsventil 8 aufgefallen ist.

Um in der nachfolgenden Beschreibung eine einheitliche und einfache Bezugnahme zu gewährleisten, sind die in allen Figuren 1 bis 6 identisch vorliegenden Komponenten der beispielhaft skizzierten Ansteuereinrichtung mit einheitlichen Bezugszeichen versehen.

Die Zeichnungsfiguren zeigen als wesentliche Komponenten der erfindungsgemäßen Ansteuereinrichtung ein von einem Hydraulikflüssigkeitsbehälter 6 über eine Hydropumpe 4 gespeistes Hydraulikflüssigkeitskanalsystems, deren einzelne Kanäle mit den Bezugszeichen 15 bis 29 gekennzeichnet sind, ein elektromagnetisch betätigbares Hauptdruckregelventil 7 zum Regeln des Systemdrucks p_{sys} der von der Hydropumpe 4 bereitgestellten und von einem Filter 5 gefilterten Hydraulikflüssigkeit, einen Handschieber 1 zum Freigeben oder Unterbrechen des Hydraulikflüssigkeitsflusses zu den beiden Kupplungen 10, 11 in Abhängigkeit von der gewählten Position eines Fahrbereichswählhebels für das Automatikgetriebe des Kraftfahrzeugs, zwei elektromagnetisch betätigbare 3/2-Wege-Steuerventile 8, 9 (nachfolgend als erstes und zweites Kupplungsventil bezeichnet) zum Ansteuern der beiden Kupplungen 10 und 11 sowie ein Multiplexventil 2, ein Sicherheitsventil 3 und ein elektrisch betätigbares 3/2-Wege Ein-/Aus-Ventil 12, deren Aufbau und Funktion nachfolgend im Detail beschrieben werden.

Der Handschieber 1 ist in an sich bekannter Art ausgebildet. Er umfasst ein im Wesentlichen zylinderförmiges Steuergehäuse 1.0, welches über dessen axialer Erstreckung 13 Schlitze 1.1, 1.2, 1.3, 1.4, 1.5, 1.6., 1.7, 1.8, 1.9, 1.10, 1.11, 1.12 und 1.13 aufweist.

In diesem Steuergehäuse 1.0 ist in axialer Richtung ein Kolben 1.15 begrenzt verschieblich geführt. Die erste Stirnseite 1.16 des Kolbens 1.15 bildet einen einendseitigen Anschlag an einer Innenseite des Steuergehäuses 1.0. Anderenendseitig ist eine Betätigungsstange 1.14 vorgesehen, mit welcher sich der Kolben 1.15 in dem zylinderförmigen Steuergehäuse 1.0 in axialer Richtung verschieben lässt.

Der Kolben 1.15 weist längst seiner axialen Erstreckung unterschiedliche Durchmesser auf. Es gibt vier Kolbenabschnitte 1.17, 1.18, 1.19, 1.20, welche im Wesentlichen formschlüssig in der Innenwandung des Steuergehäuses 1.0 geführt sind. Fernerhin existieren drei Kolbenabschnitte 1.21, 1.22, 1.23, welche einen kleineren Aussendruchmesser aufweisen. Ein Kolbenabschnitt 1.21, 1.22, 1.23 der letztgenannten Art ist dabei jeweils in axialer Richtung benachbart zwischen zwei Kolbenabschnitten 1.17, 1.18., 1.19, 1.20 der erstgenannten Art angeordnet.

Erstreckt sich ein Kolbenabschnitt 1.21, 1.22, 1.23 der letztgenannten Art in einer bestimmten Stellung des Kolbens 1.15 in dem Steuergehäuse 1.0' von einem Schlitz 1.1, 1.2, 1.3, 1.4, 1.5, 1.6, 1.7, 1.8, 1.9, 1.10, 1.11, 1.12, 1.13 zu einem benachbarten Schlitz 1.1, 1.2, 1.3, 1.4, 1.5, 1.6, 1.7, 1.8. 1.9, 1.10, 1.11, 1.12, 1.13 so ist ein Durchfluss von Hydraulikflüssigkeit zwischen diesen beiden benachbarten Schlitzen 1.1, 1.2, 1.3, 1.4, 1.5, 1.6, 1.7, 1.8, 1.9, 1.10, 1.11, 1.12, 1.13 möglich. Kolbenabschnitte 1.21, 1.22, 1.23 der letztgenannten Art werden daher im folgenden als öffnende Kolbenabschnitte 1.21, 1.22, 1.23 bezeichnet, die anderen formschlüssig an der Innenwandung des Steuergehäuses 1.0 geführten Kolbenabschnitte 1.17, 1.18, 1.19, 1.20 werden nachfolgend als schließende Kolbenabschnitte 1.17, 1.18, 1.19, 1.20 bezeichnet, da hier kein Durchfluss von Hydraulikflüssigkeit zwischen benachbarten Schlitzen 1.1, 1.2, 1.3, 1.4, 1.5, 1.6, 1.7, 1.8, 1.9, 1.10, 1.11, 1.12, 1.13 möglich ist.

Der Kolben 1.15 des Handschiebers 1 ist im Ausführungsbeispiel in vier unterschiedliche Stellungen verbringbar. In einer Fahrbereichswählhebelposition "Drive" liegt die Stirnfläche 1.16 im vorliegenden Ausführungsbeispiel an der Endseite des Steuergehäuses 1.0 an (positionsbestimmend ist dabei die Kolbenstangenposition auf Grund der Wählhebelstellung). In dieser "Drive"-Position übergreift der erste öffnende Kolbenabschnitt 1.21 den zweiten Schlitz 1.2 partiell. Der zweite öffnende Kolbenabschnitt 1.22 übergreift den vierten, fünften und sechsten Schlitz. Der dritte öffnende Kolbenabschnitt 1.23 übergreift den neunten und zehnten Schlitz.

In der Wählhebelposition "Neutral" befindet sich der Kolben 1.15 in einer Stellung, in der der erste öffnende Kolbenabschnitt 1.21 den zweiten und dritten Schlitz 1.2, 1.3 der zweite öffnenden Kolbenabschnitt 1.22 den fünften, sechsten und teilweise den siebenten Schlitz 1.5, 1.6, 1.7 der dritte Kolbenabschnitt 1.23 teilweise den zehnten und den elften Schlitz 1.10, 1.11 vollständig übergreift.

Befindet sich der Fahrbereichswählhebel in der Position "Reverse" so übergreift der erste öffnende Kolbenabschnitt 1.21 die Schlitze 1.3 und 1.4 teilweise, der zweite öffnende Kolbenabschnitt 1.22 übergreift die Schlitze 1.6, 1.7 sowie teilweise den Kolbenabschnitt 1.8. Der dritte öffnende Kolbenabschnitt 1.23 übergreift den elften und zwölften Schlitz 1.11, 1.12.

Ist die Fahrbereichswählhebelposition "Parking" angewählt, so befindet sich der Kolben 1.15 in einer Position, in der der erste öffnende Kolbenabschnitt 1.21 lediglich den fünften Schlitz 1.5, der zweite öffnende Kolbenabschnitt 1.22 die Kolbenabschnitte 1.7, 1.8 und 1.9 sowie der dritte öffnende Kolbenabschnitt 1.23 lediglich den dreizehnten Schlitz 1.13 übergreift.

Das Multiplexventil 2 ist wie folgt ausgebildet:

Es umfasst ein im Wesentlichen zylinderförmiges Steuergehäuse 2.0, welches über dessen axialer Erstreckung 13 Schlitze, 2.1, 2.2, 2.3, 2.4, 2.5, 2.6, 2.7, 2.8, 2.9, 2.10, 2.11, 2.12, 2.13 aufweist.

In diesem Steuergehäuse 2.0 ist in axialer Richtung ein Kolben 2.15 begrenzt verschieblich geführt. Die erste Stirnseite 2.16a des Kolbens 2.15 bildet einen einendseitigen Anschlag an einer Endseite des Steuergehäuses 2.0. An dem dieser Stirnseite 2.16a gegenüberliegenden Ende des Kolbens 2.15 ist stirnseitig eine Kolbenbetätigungsfeder 2.14 angeordnet, welche bei fehlender sonstiger Krafteinwirkung auf den Kolben 2.15 die erste Stirnseite 2.16a des Kolbens 2.15 gegen die eine Endseite des Steuergehäuses 1.0 gedrückt hält.

Der Kolben 2.15 weist entsprechend der vorstehenden Definition fünf öffnende und vier schließende Kolbenabschnitte 2.17, 2.18, 2.19, 2.20, 2.21, 2.22, 2.23, 2.24, 2.25 auf. Der erste schließende Kolbenabschnitt 2.17 bildet auf der der ersten Stirnseite 2.16a zugewandten Seite eine den öffnenden Kolbenabschnitt 2.21 ringförmig umschließende zweite Stirnfläche 2.16b, deren Aufgabe im nachfolgenden beschrieben wird.

Der Kolben 2.15 des Multiplexventils 2 ist wahlweise in eine erste Position verbringbar, in welcher der erste öffnende Kolbenabschnitt 2.21 nur den ersten Schlitz 2.1, der zweite öffnende Kolbenabschnitt 2.22 den vierten und fünften Schlitz 2.4, 2.5, der dritte öffnende Kolbenabschnitt 2.23 den siebenten und achten Schlitz 2.7, 2.8, der vierte öffnende Kolbenabschnitt 2.24 den neunten und zehnten Schlitz 2.9, 2.10 und der fünfte öffnende Kolbenabschnitt 2.25 den zwölften und dreizehnten Schlitz 2.12, 2.13 übergreift oder in eine zweite Position, in welcher der erste öffnende Kolbenabschnitt 2.21 den zweiten und dritten Schlitz 2.2, 2.3, der zweite öffnende Kolbenabschnitt 2.22 den fünften und sechsten Schlitz 2.5, 2.6, der dritte öffnende Kolbenabschnitt 2.23 den achten und neunten Schlitz 2.8, 2.9, der vierte öffnende Kolbenabschnitt 2.24 den zehnten und elften Schlitz 2.10, 1.11 und der fünfte öffnende Kolbenabschnitt 2.25 den dreizehnten Schlitz 2.13 übergreift.

Auch das Sicherheitsventil 3 ist in an sich bekannter Art ausgebildet. Es umfasst ebenfalls ein im Wesentlichen zylinderförmiges Steuergehäuse 3.0, welches über dessen axialer Erstreckung neun Schlitze 3.1, 3.2, 3.3, 3.4, 3.5, 3.6, 3.7, 3.8, 3.9 aufweist.

In diesem Steuergehäuse 3.0 ist in axialer Richtung ein Kolben 2.19 begrenzt verschieblich geführt. Die erste Stirnseite 3.11 des Kolbens 3.19 bildet einen einendseitigen Anschlag an einer Endseite des Steuergehäuses 3.0. Zwischen der am gegenüberliegenden Ende des Kolbens 3.19 angeordneten Stirnseite und der anderen Endseite des Steuergehäuses 3.0 ist eine Kolbenbetätigungsfeder 3.10 angeordnet, welche bei fehlender sonstiger Krafteinwirkung auf den Kolben 3.19 die erste Stirnseite 3.11 des Kolbens 3.19 gegen die eine Endseite des Steuergehäuses 3.0 gedrückt hält.

Auch der Kolben 3.19 weist längs seiner axialen Erstreckung unterschiedliche Durchmesser auf. Es gibt drei schließende Kolbenabschnitte 3.12, 3.13, 3.14, welche im Wesentlichen formschlüssig in der Innenwandung des Steuergehäuses 3.0 geführt sind. Fernerhin gibt es benachbart zu diesen und zwischen diesen angeordnet zwei Kolbenabschnitte 3.15, 3.16, welche einen kleineren Außendurchmesser aufweisen, die öffnenden Kolbenabschnitte 3.15, 3.16.

Der Kolben 3.19 ist wahlweise in eine erste Position verbringbar, in welcher der erste öffnende Kolbenabschnitt 3.15 den zweiten und dritten Schlitz 3.2, 3.3 und der zweite öffnende Kolbenabschnitt 3.16 den fünften und sechsten Schlitz 3.5 und 3.6 übergreift oder in eine zweite Position, in welcher der erste öffnende Kolbenabschnitt 3.15 den dritten und vierten Schlitz 3.3, 3.4 und der zweite öffnende Kolbenabschnitt 3.16 den sechsten und siebenten Schlitz 3.6 und 3.7 übergreift.

Die einzelnen vorstehend genannten bzw. beschriebenen Einzelbauteile der Ansteuereinrichtung sind über das vorstehend ebenfalls erwähnte Hydraulikflüssigkeitskanalsystem in nachfolgend beschriebener Weise miteinander verbunden:

Im Hydraulikflüssigkeitsbehälter 6 wird Hydraulikflüssigkeit bereitgestellt. Von diesem Hydraulikflüssigkeitsbehälter 6 führt ein Kanal 15 zu einem Filter 5. Von dort führt ein Kanal 16 zur Hydropumpe 4, welche einen hydraulischen Druck im Leitungssystem erzeugt.

Der Ausgang der Hydropumpe 4 mündet in den Kanal 17. An diesen Kanal 17 ist das vorstehend genannte elektrisch betätigbare Hauptdruckregelventil 7 angeschlossen, welches den Druck der Hydraulikflüssigkeit im Kanal 17 durch Abgabe überschüssiger Hydraulikflüssigkeit in einen offenen Behälter 7.1 auf den Systemdruck p_{sys} regelt.

Der hydraulikflüssigkeitsführende Kanal 17 ist auf den vierten Schlitz 1.4 des Handschiebers 1, den dritten Schlitz 2.3 des Multiplexventils 2 sowie den Eingang des elektrisch betätigbaren 3/2-Wege Ein-/Aus-Ventils 12 geführt.

Ein Kanal 27 verbindet die Schlitze 1.3 und 1.5 des Handschiebers 1 mit dem Eingang des ersten Kupplungsventils 8 und dem sechsten Schlitz 2.6 des Multiplexventils 2. Ein Kanal 28 verbindet die Schlitze 1.6 und 1.8 des Handschiebers 1 mit dem vierten Schlitz 2.4 des Multiplexventils 2. Ein Kanal 29 verbindet den neunten Schlitz 1.9, den elften Schlitz 1.11 und den dreizehnten Schlitz 1.13 des Handschiebers 1 mit dem ersten Schlitz 2.1 des Multiplexventils 2.

Ein Kanal 26 verbindet den Ausgang des ersten Kupplungsventils 8 mit dem siebenten Schlitz 2.7 des Multiplexventils 2.

Ein Kanal 25 verbindet den Eingang des zweiten Kupplungsventils 9 mit dem fünften Schlitz 2:5 des Multiplexventils 2.

Ein Kanal 24 verbindet den Ausgang des zweiten Kupplungsventils 9 mit dem neunten Schlitz 2.9 des Multiplexventils 2.

Weiterhin besteht über einen Kanal 18 eine Verbindung zwischen dem Ausgang des Ein-/Aus-Ventils 12, dem Schlitz 1.12 des

Handschiebers 1 sowie dem ersten Schlitz 3.1 des Sicherheitsventils 3.

Ein Kanal 21 verbindet die Schlitze 2.8 des Multiplexventils 2 und 3.2 des Sicherheitsventils 3. Ein Kanal 22 verbindet den Schlitz 2.10 des Multiplexventils 2 mit dem Schlitz 3.6 des Sicherheitsventils 3.

Schließlich besteht eine Verbindung zwischen dem Schlitz 3.7 und der zweiten Kupplung 11 über den Kanal 20 sowie in entsprechender Weise eine Verbindung zwischen dem Schlitz 3.3 und der ersten Kupplung 10 über den Kanal 19.

Die übrigen Schlitze 1.1, 1.2, 1.7, 1.10 des Handschiebers 1, 2.11 und 2.13 des Multiplexventils 2 und 3.4, 3.8 und 3.19 des Sicherheitsventils 3 sowie die übrigen Eingänge der Kupplungsventile 8 und 9 sowie des Ein-/Aus-Ventils 12 sind mit einem offenen Hydraulikflüssigkeitsbehälter 1.24, 1.25, 1.26 , 1.27, 2.25, 2.26, 3.18, 8.1, 9.1, 12.1 verbunden.

Weiterhin besteht eine Verbindung über den Kanal 23 zwischen den Schlitzen 2.2 und 2.12 des Multiplexventils.

Für die folgende Betrachtung wird nunmehr angenommen, dass ein Motor (z. B. ein Verbrennungsmotor oder ein Elektromotor) die Hydropumpe 4 antreibt, so dass an deren Pumpenaustritt und damit im Kanal 17 ein von dem Hauptdruckregelventil 7 geregelter im Wesentlichen konstanter Hydraulikflüssigkeitssystemdruck p_{sys} anliegt.

Die Kolben der einzelnen Ventile 1, 8, 9, 2, 3, 12 sollen sich zunächst in den in Figur 1 dargestellten Stellungen befinden. Insbesondere befindet sich der Kolben 1.15 des Handschiebers 1 in der Position "Drive", der Kolben 2.15 des Multiplexventils 2 befindet sich in der ersten Position ebenso befindet sich der Kolben 3.19 des Sicherheitsventils 3 in der ersten Position. Das Ein-/Aus-Ventil 12 ist geschlossen. Der Hydraulikflüssigkeitssystemdruck p_{sys} des Kanals 17 wird über den vierten Schlitz 1.4 des Handschiebers 1 und den Kanal 27 auf den Eingang des ersten Kupplungsventils abgeführt. Weiterhin wird der Hydraulikflüssigkeitssystemdruck p_{sys} des Kanals 17 über den fünften und sechsten Schlitz 1.5, 1.6 des Handschiebers 1, den Kanal 28, den vierten und fünften Schlitz 2.4, 2.5 des Multiplexventils auf den Eingang des zweiten Kupplungsventils 9 geführt.

Der Ausgang des ersten Kupplungsventils 8 ist über Kanal 26, die Schlitze 2.7 und 2.8 des Multiplexventils 2, den Kanal 21, die Schlitze 3.2 und 3.3 des Sicherheitsventils 3 und den Kanal 19 mit der ersten Kupplung 10 verbunden. In entsprechender Weise ist der Ausgang des Kupplungsventils 9 über den Kanal 24, die Schlitze 2.9 und 2.10 des Multiplexventils 2, den Kanal 22, die Schlitze 3.5 und 3.6 des Sicherheitsventils 3 und den Kanal 20 mit der zweiten Kupplung 11 verbunden.

Durch Betätigung der jeweiligen Kupplungsventile 8 und 9 können in dem in Figur 1 dargestellten Zustand die Kupplungen 10 und 11 hydraulisch betätigt werden.

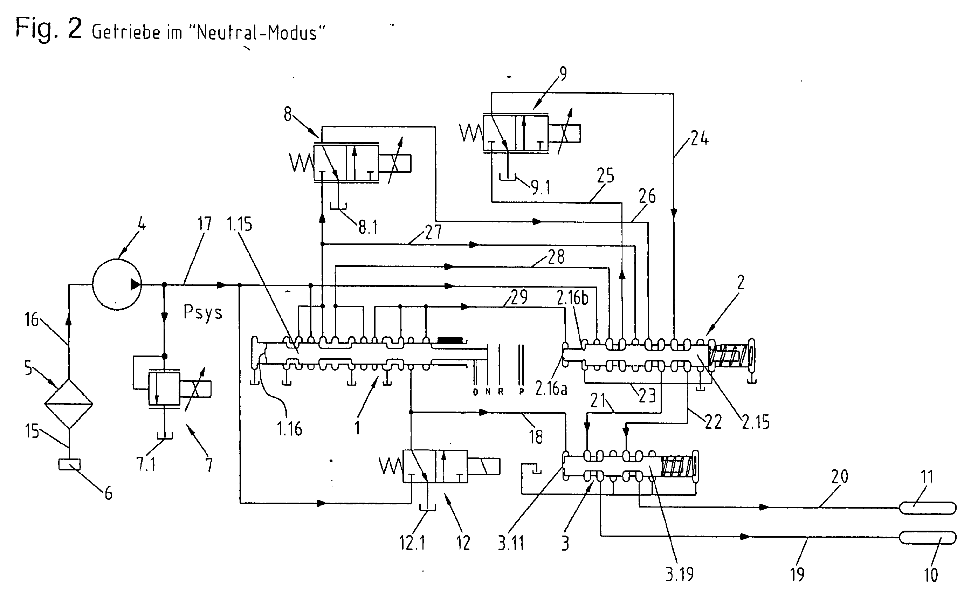

Die Kolben der einzelnen Ventile 8, 9, 12, 1, 2, 3 sollen sich nunmehr in der in der Figur 2 dargestellten Stellung befinden. Insbesondere befindet sich der Kolben 1.15 des Handschiebers 1 in der Stellung "Neutral". Das Multiplexventil 2 und das Sicherheitsventil 3 befinden sich jeweils in der Position 1. Das Ein-/Aus-Ventil 12 ist geschlossen. Der Hydraulikflüssigkeitssystemdruck p_{sys} des Kanals 17 liegt an den Schlitzen 1.4 des Handschiebers 1 und 2.3 des Multiplexventils 2 sowie am Eingang des Ein-/Aus-Ventils 12 an.

Es besteht keine durchgehende Verbindung zu den Kupplungsventilen 8 und 9. Eine Betätigung der Kupplung über diese Kupplungsventile 8 und 9 ist also nicht möglich. In der in der Figur 2 dargestellten Ventilstellung der Kupplungsventile 8 und 9 werden die Kupplungen 10 und 11 über Kanal 19, Schlitz 3.3, Schlitz 3.2, Kanal 21, Schlitz 2.8, Schlitz 2.7, Kanal 26 über den offenen Behälter 8.1 sowie Kanal 20, Schlitz 3.6, Schlitz 3.5, Kanal 22, Schlitz 2.10, Schlitz 2.9, Kanal 24 und den offenen Behälter 9.1 entleert.

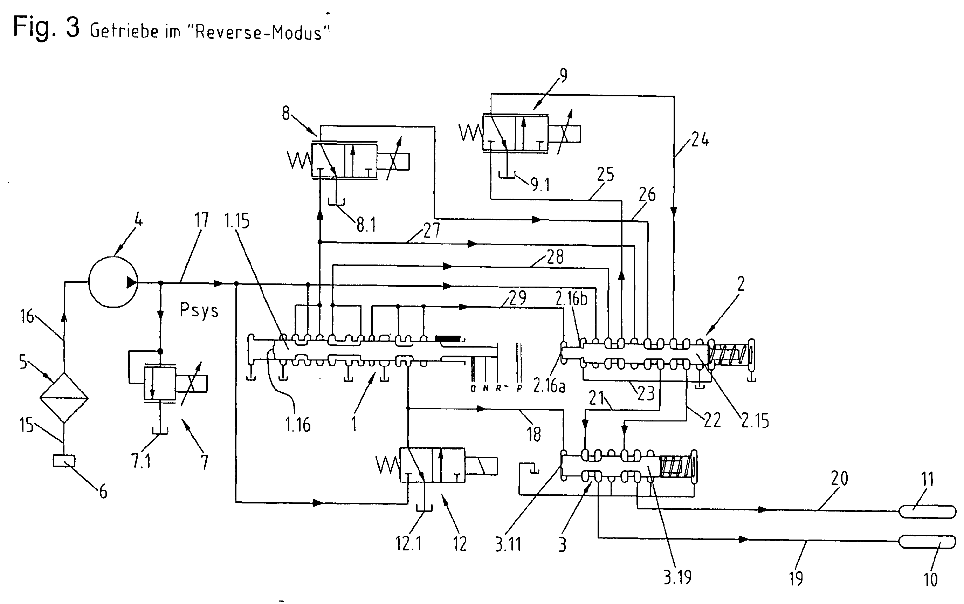

In einem dritten Schritt sollen sich weiterhin die Kolben der einzelnen Ventile 8, 9, 12, 1, 2, 3 in der in der Figur 3 dargestellten Stellung befinden. Das Ein-/Aus-Ventil 12 ist geschlossen. Der Kolben 2.15 des Multiplexventils 2 befindet sich in der ersten Position, ebenso befindet sich der Kolben 3.19 des Sicherheitsventils 3 in der ersten Position. Es ist die Fahrbereichswählhebelposition "Reverse" gewählt. Der Kolben 1.15 des Handschiebers 1 befindet sich in der entsprechenden Stellung. Der Hydraulikflüssigkeitssystemdruck p_{sys} des Kanals 17 wird über die Schlitze 1.4 und 1.3 auf den Kanal 27 und damit auf den Eingang des ersten Kupplungsventils 8 geführt. Der Eingang des zweiten Kupplungsventils 9 ist über den Kanal 25, den fünften Schlitz 2.5, den vierten Schlitz 2.4 des Multiplexventils 2 auf den Kanal 28 und von dort über die Schlitze 1.6 und 1.8 auf den Schlitz 1.7 des Handschiebers 1 geführt, welcher mit dem offenen Behälter 1.26 verbunden ist. Am Eingang des zweiten Kupplungsventils 9 liegt somit kein Systemdruck p_{sys} an. Da die beiden Kupplungen 10 und 11 in der vorstehend beschriebenen Weise mit den entsprechenden Kupplungsventilen 8 und 9 verbunden sind, ist in dieser in Figur 3 dargestellten Ventilstellung mittels des ersten Kupplungsventils 8 lediglich eine Betätigung der ersten Kupplung 10 möglich.

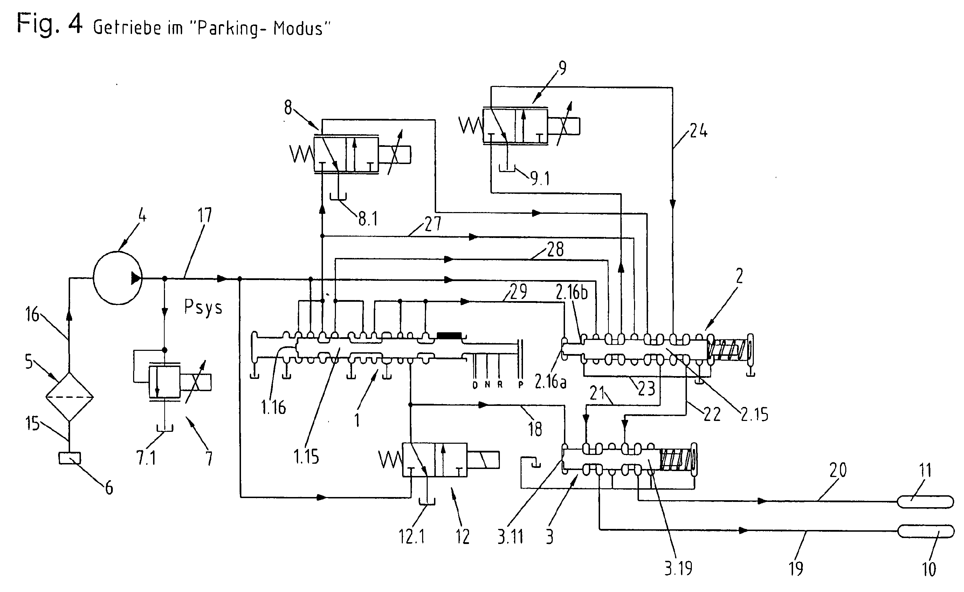

In einem vierten Schritt seien die einzelnen Ventile 8, 9, 12, 1, 2 und 3 in der in Figur 4 dargestellten Stellung. Insbesondere sei wiederum das Ein-/Aus-Ventil 12 geschlossen. Die Kolben 2.15 und 3.19 des Multiplexventils 2 und des Sicherheitsventils 3 seien wiederum in der Position 1. Der Kolben 1.15 des Handschiebers 1 befindet sich nunmehr in der "Parking"-Position. Der Hydraulikflüssigkeitssystemdruck p_{sys} des Kanals 17 liegt ähnlich der "Neutral"-Stellung an den Schlitzen 1.4 bzw. 2.3 des Handschiebers 1 sowie des Multiplexventils 2 und am Eingang des Ein-/Aus-Ventils 12 an.

Eine Betätigung der Kupplungen 10 und 11 mittels der Kupplungsventile 8 und 9 ist demzufolge wiederum nicht möglich.

Im Weiteren sollen sich die Kolben der einzelnen Ventile 8, 9, 12, 1, 2, 3 in den in Figur 5 dargestellten Stellungen befinden. Insbesondere sei der Betätigungskolben 1.15 des Handschiebers 1 in der "Reverse"-Stellung.

Der Hydraulikflüssigkeitssystemdruck p_{sys} des Kanals 17 liegt entsprechend der vorstehenden Beschreibung zur Figur 3 am Eingang des ersten Kupplungsventils 8 an.

Entgegen der vorstehenden Annahme sei nunmehr angenommen, dass ein Fehlerfall vorliege und dass sich das erste Kupplungsventil 8 nicht mehr aus der in der Figur 5 dargestellten Stellung nicht mehr verbringen lasse.

Würden sich die Ventile 2, 3 und 12 in der in der Figur 3 dargestellten Stellung befinden, so wäre eine Betätigung der ersten Kupplung 10 nicht möglich. Ein Einlegen des Rückwärtsganges und damit ein Rückwärtsfahren des Kraftfahrzeugs wäre ausgeschlossen.

Es sei nunmehr angenommen, dass eine elektronische Steuereinrichtung oder dergleichen diesen Fehlerzustand des ersten Kupplungsventils 8 erkannt hat. Diese Steuereinrichtung sorgt nunmehr dafür, dass sich das Ein-/Aus-Ventil 12 öffnet. In dieser Folge wird der Hydraulikflüssigkeitssystemdruck p_{sys} des Kanals 17 auf den Kanal 18 und damit einerseits über die Schlitze 1.12 und 1.11 des Handschiebers 1 auf den Kanal 29 und damit auf den Schlitz 2.1 des Multiplexventils 2 und andererseits auf den Schlitz 3.1 des Sicherheitsventils 3 geführt.

Dieser Hydraulikflüssigkeitssystemdruck p_{sys} wirkt nunmehr auf die beiden Stirnflächen 2.16a und 3.11 der jeweiligen Kolben 2.15 und 3.19 des Multiplexventils 2 und des Sicherheitsventils 3 und verschiebt diese Kolben 2.15 und 3.19 entgegen dem Druck der jeweiligen Betätigungsfedern 2.14 und 3.10 in die jeweilige vorstehend im Detail definierte zweite Position.

Da sich nunmehr der Kolben 2.15 des Multiplexventils 2 in der zweiten Position befindet, wird der Hydraulikflüssigkeitssystemdruck p_{sys} des Kanals 17 über den vierten und dritten Schlitz 1.4, 1.3 des Handschiebers 1 auf den Kanal 27 und von dort weiter auf den sechsten und fünften Schlitz 2.6, 2.5 des Multiplexventils 2 zum Kanal 25, welcher auf den Eingang des zweiten Kupplungsventils 9 geführt ist. Demzufolge liegt nunmehr der Hydraulikflüssigkeitssystemdruck p_{sys} am Eingang des zweiten Kupplungsventils 9 an.

Der Ausgang des Kupplungsventils 9 ist nunmehr über den Kanal 24 sowie die Schlitze 2.9 und 2.8 des Multiplexventils 2 mit dem Kanal 21 verbunden, welcher wiederum auf den zweiten Schlitz 3.2 des Sicherheitsventils 3 geführt ist. Eine Verbindung zu einer der beiden Kupplungen 10 oder 11 besteht nicht, da sich das Sicherheitsventil 3 nunmehr in der zweiten Position befindet. Eine Betätigung des zweiten Kupplungsventils 9 würde also keine Betätigung einer der beiden Kupplungen 10, 11 auslösen.

Die beschriebene Stellung des Kolbens 3.19 des Sicherheitsventils 3 stellt jedoch eine Verbindung zwischen der ersten Kupplung 10 und dem offenen Behälter 3.18 über den Kanal 19 und die Schlitze 3.3 und 3.4 sowie zwischen der zweiten Kupplung 11 und dem offenen Behälter 3.18 über den Kanal 20 und die Schlitze 3.6 und 3.7 her. In dieser Stellung des Kolbens 3.19 des Sicherheitsventils 3 erfolgt also eine vollständige Entleerung der Kupplungen 10 und 11, ohne dass eine Betätigung der Kupplungen 10, 11 durch eine der beiden Kupplungsventile 8 und 9 möglich wäre.

Erfindungsgemäß ist daher vorgesehen, das Ein-/Aus-Ventil 12 nach erfolgter Entleerung der beiden Kupplungen 10 und 11 wieder zu schließen, was der Figur 6 zu entnehmen ist. Dies hat zur Folge, dass die zunächst entsprechend der Figur 5 unter Hydraulikflüssigkeitssystemdruck P_{sys} stehende Hydraulikflüssigkeit, welche die beiden Kolben 2.15, 3.19 der Ventile 2 und 3 in die zweite Position verbracht hat, über die jeweiligen ersten Schlitze 2.1, 3.1 und die zugehörigen Kanäle 18 und 29 in den offenen Behälter 12.1 abfließen kann. Dadurch wird der Kolben 3.19 des Sicherheitsventils 3 durch die Federkraft der Kolbenbetätigungsfeder 3.10 in die Position 1 verbracht. Demgegenüber steht der Hydraulikflüssigkeitssystemhauptdruck p_{sys} des Kanals 17 am dritten Schlitz 2.3 des Multiplexventils 3 an, wo er auf die zweite Stirnfläche 2.16b des Kolbens 2.15 drückt und diesen entgegen der Kraft der Betätigungsfeder 2.14 in der zweiten Position hält.

Der Ausgang des zweiten Kupplungsventils 9 ist weiterhin über den Kanal 24 und die Schlitze 2.9 und 2.8 mit dem Kanal 21 verbunden. Die Kolbenstellung des Sicherheitsventils 3 stellt weiterhin eine Verbindung des Kanals 21 über die Schlitze 3.2 und 3.3 zum Kanal 19 und damit zur ersten Kupplung 10 her. Durch Betätigung des zweiten Kupplungsventils 9 läßt sich die erste Kupplung 10 über Kanal 24, Schlitz 2.9, Schlitz 2.8, Kanal 21, Schlitz 3.2, Schlitz 3.3, Kanal 19 die zweite Kupplung 10 hydraulisch betätigen. Das Kraftfahrzeug kann somit auch rückwärts fahren.

### Bezugszeichenliste

- 1: Handschieber
- 1.0: Steuergehäuse
- 1.1: Schlitz
- 1.2: Schlitz
- 1.2: Schlitz
- 1.4: Schlitz
- 1.5: Schlitz
- 1.6: Schlitz
- 1.7: Schlitz
- 1.8: Schlitz
- 1.9: Schlitz
- 1.10: Schlitz
- 1.11: Schlitz
- 1.12: Schlitz
- 1.13: Schlitz
- 1.14: Betätigungsstange
- 1.15: Kolben
- 1.16: Stirnseite des Kolbens
- 1.17: schließender Kolbenabschnitt
- 1.18: schließender Kolbenabschnitt
- 1.19: schließender Kolbenabschnitt
- 1.20: schließender Kolbenabschnitt
- 1.21: öffnender Kolbenabschnitt
- 1.22: öffnender Kolbenabschnitt
- 1.23: öffnender Kolbenabschnitt
- 1.24: Offener Behälter
- 1.25: offener Behälter
- 1.26: offener Behälter
- 1.27: offener Behälter
- 2: Multiplexventil
- 2.0: Steuergehäuse
- 2.1: Schlitz
- 2.2: Schlitz
- 2.3: Schlitz
- 2.4: Schlitz
- 2.5: Schlitz
- 2.6: Schlitz
- 2.7: Schlitz
- 2.8: Schlitz
- 2.9: Schlitz
- 2.10: Schlitz
- 2.11: Schlitz
- 2.12: Schlitz
- 2.13: Schlitz
- 2.14: Betätigungsfeder
- 2.15: Kolben
- 2.16a: erste Stirnfläche des Kolbens 2.15
- 2.16b: zweite Stirnfläche des Kolbens 2.15
- 2.16: schließender Kolbenabschnitt
- 2.17: schließender Kolbenabschnitt
- 2.18: schließender Kolbenabschnitt
- 2.19: schließender Kolbenabschnitt
- 2.20: schließender Kolbenabschnitt
- 2.21: schließender Kolbenabschnitt
- 2.22: öffnender Kolbenabschnitt
- 2.23: öffnender Kolbenabschnitt
- 2.24: öffnender Kolbenabschnitt
- 2.25: öffnender Kolbenabschnitt
- 2.26: offener Behälter
- 2.27: offener Behälter
- 3: Sicherheitsventil
- 3.0: Steuergehäuse
- 3.1: Schlitz
- 3.2: Schlitz
- 3.3: Schlitz
- 3.4: Schlitz
- 3.5: Schlitz
- 3.6: Schlitz
- 3.7: Schlitz
- 3.8: Schlitz
- 3.9: Schlitz
- 3.10: Betätigungsfeder
- 3.11: Stirnseite des Kolbens
- 3.12: schließender Kolbenabschnitt
- 3.13: schließender Kolbenabschnitt
- 3.14: schließender Kolbenabschnitt
- 3.15: öffnender Kolbenabschnitt
- 3.16: öffnender Kolbenabschnitt
- 3.17: offener Behälter
- 3.18: offener Behälter
- 3.19: Kolben

- 4: Hydropumpe
- 5: Filter
- 6: Hydraulikflüssigkeitsbehälter
- 7: Hauptdruckregelventil
- 8: erstes Kupplungsventil (elektrisch betätigbares 3/2-WegeVentil)
- 9: zweites Kupplungsventil (elektrisch betätigbares 3/2-WegeVentil)
- 10: erste Kupplung
- 11: zweite Kupplung
- 12: elektrisch betätigbares 3/2-Wege Ein-/Aus-Ventil

## Patentansprüche

1. Ansteuereinrichtung für eine erste und eine zweite hydraulisch betätigbare Kupplung (10, 11) eines Doppelkupplungsgetriebes eines Kraftfahrzeugs
- mit einem zum hydraulischen Betätigen der ersten Kupplung (10) vorgesehenen, in einem ersten durch erste Kanäle (15, 16, 17, 27, 26, 21, 19) gebildeten hydraulikflüssigkeitsführenden Pfad zu der ersten Kupplung (10) liegenden und diesen ersten Pfad öffnenden oder schließenden ersten Kupplungsventil (8)
- mit einem zum hydraulischen Betätigen der zweiten Kupplung (11) vorgesehen, in einem zweiten durch zweite Kanäle (15, 16, 17, 28, 25, 24, 22, 20) gebildeten hydraulikflüssigkeitsführenden Pfad zu der zweiten Kupplung (11) liegenden und diesen zweiten Pfad öffnenden oder schließenden zweiten Kupplungsventil (9)
- mit einem in Abhängigkeit von einer Position (Drive, Neutral, Reverse, Parking) eines Fahrbereichswählhebels den ersten und/oder zweiten Pfad öffnenden oder schließenden Ventil (1), welches in einer ersten Fahrbereichswählhebelposition (Reverse) den ersten Pfad öffnet und den zweiten Pfad schließt,
**dadurch gekennzeichnet, dass**
- ein Multiplexventil (2) vorgesehen ist, welches bei Ausfall des ersten Kupplungsventils (8) die ersten und zweiten Kanäle (15, 16, 17, 27, 25, 24, 21, 19) derart miteinander verbindet, dass das zweite Kupplungsventil (9) in dem ersten Pfad liegt und diesen ersten Pfad öffnet oder schließt.

2. Ansteuereinrichtung nach Anspruch 1,
**dadurch gekennzeichnet, dass** das Multiplexventil (2) eine Selbsthalteeinrichtung (2,16a, 2.16b) aufweist, welche das Multiplexventil (2) in der die Kanäle (15, 16, 17, 27, 25, 24, 21, 19) miteinander verbindenden Ventilstellung hält, in der das zweite Kupplungsventil (9) in dem ersten Pfad liegt und diesen Pfad öffnet oder schließt.

3. Ansteuereinrichtung nach Anspruch 2,
**dadurch gekennzeichnet, dass** die Selbsthalteeinrichtung (2.16a, 2.16b) nur dann wirksam ist, wenn der Druck der Hydraulikflüssigkeit einen vorgebbaren Schwellwert überschreitet.

4. Ansteuereinrichtung nach einem der Ansprüche 1 bis 3,
**dadurch gekennzeichnet, dass** das Multiplexventil (2) einen in einem wenigstens 13 Schlitze (2.1, 2.2, 2.3, 2.4, 2.5, 2.6, 2.7, 2.8, 2.9, 2.10, 2.11, 2.12, 2.13) aufweisenden Steuergehäuse (2.0) geführten Kolben (2.15) mit fünf öffnenden und vier schließenden Kolbenabschnitten (2.17, 2.18, 2.19, 2.20, 2.21, 2.22, 2.23, 2.24, 2.25) aufweist, wobei der Kolben (2.15) wahlweise in eine erste Position verbringbar ist, in welcher der erste öffnende Kolbenabschnitt (2.21) nur den ersten Schlitz (2.1), der zweite öffnende Kolbenabschnitt (2.22) den vierten und fünften Schlitz (2.4, 2.5), der dritte öffnende Kolbenabschnitt (2.23) den siebenten und achten Schlitz (2.7, 2.8), der vierte öffnende Kolbenabschnitt (2.24) den neunten und zehnten Schlitz (2.9, 2.10) und der fünfte öffnende Kolbenabschnitt (2.25) den zwölften und dreizehnten Schlitz (2.12, 2.13) übergreift oder in eine zweite Position, in welcher der erste öffnende Kolbenabschnitt (2.21) den zweiten und dritten Schlitz (2.2, 2.3), der zweite öffnende Kolbenabschnitt (2.22) den fünften und sechsten Schlitz (2.5, 2.6) der dritte öffnende Kolbenabschnitt (2.23) den achten und neunten Schlitz (2.8, 2.9), der vierte öffnende Kolbenabschnitt (2.24) den zehnten und elften Schlitz (2.10, 2.11) und der fünfte öffnende Kolbenabschnitt (2.25) den dreizehnten Schlitz (2.13) übergreift und wobei der zweite Schlitz (2.2) über einen Kanal (23) mit dem zwölften Schlitz (2.12), der dritte Schlitz (2.3) über einen Kanal (17) mit einem Hydraulikflüssigkeitsbehälter (6) mit Systemdruck (p_{sys}), der vierte Schlitz (2.4) in der ersten Fahrbereichswählhebelposition (Reverse) mit einem offenen Behälter (1.26) der fünfte Schlitz (2.5) mit dem Eingang des zweiten Kupplungsventils (9) der sechste Schlitz (2.6) mit dem Eingang des ersten Kupplungsventils (8), der siebente Schlitz (7) mit dem Ausgang des ersten Kupplungsventil (8) der achte Schlitz (2.8) mit dem zu der ersten Kupplung (10) führenden Kanal (21,19) der neunte Schlitz (2.9) mit dem Ausgang des zweiten Kupplungsventils (9) der zehnte Schlitz (2.10) mit dem zu der zweiten Kupplung (11) führenden Kanal (22, 20), der elfte Schlitz (2.11) mit dem offenen Behälter (2.25) und der dreizehnte Schlitz (2.13) mit dem offenen Behälter (2.26) verbunden ist.

5. Ansteuereinrichtung nach Anspruch 4,
**dadurch gekennzeichnet, dass** der erste Schlitz (2.1) des Multiplexventils (2) in der ersten Fahrbereichswählhebelposition (Reverse) mit dem Hydraulikflüssigkeitsbehälter (6) mit Systemdruck (p_{sys}) verbindbar ist, welcher im verbunden Zustand entgegen der Kraft einer Feder (2.14) auf eine erste Stirnfläche (2.16a) des Kolbens (2.15), diesen in die zweite Position verbringend wirkt.

6. Ansteuereinrichtung nach Anspruch 5,
**dadurch gekennzeichnet, dass** ein Elektromagnetventil (12) zum Verbinden des ersten Schlitzes (2.1) des Multiplexventils (2) mit dem Hydraulikflüssigkeitsbehälter (6) mit Systemdruck (P_{sys}) vorgesehen ist.

7. Ansteuereinrichtung nach einem der Ansprüche 5 oder 6,
**dadurch gekennzeichnet, dass** der erste schließende Kolbenabschnitt (2.17) eine zweite Stirnfläche (2.16 b) des Kolbens (2.15) aufweist.

8. Ansteuereinrichtung nach einem der vorangegangenen Ansprüche, **dadurch gekennzeichnet, dass** ein Sicherheitsventil (3) zum Entleeren der Kupplungen (10, 11) vorgesehen ist.

9. Ansteuereinrichtung nach Anspruch 8,
**dadurch gekennzeichnet, dass** das Sicherheitsventil (3) einen in einem acht Schlitze (3.1, 3.2, 3.3, 3.4, 3.5, 3.6, 3.7, 3.8) aufweisenden Steuergehäuse (3.0) geführten Kolben (3.19) mit zwei öffnenden und drei schließenden Kolbenabschnitten (3.12, 3.13, 3.14, 3.15, 3.16) aufweist, wobei der Kolben (3.19) wahlweise in eine erste Position verbringbar ist, in welcher der erste öffnende Kolbenabschnitt (3.15) den zweiten und dritten Schlitz (3.2, 3.3) und der zweite öffnende Kolbenabschnitt (3.16) den sechsten Schlitz (3.6) übergreift oder in eine zweite Position zum Drucklosschalten der Kupplung, in welcher der erste öffnende Kolbenabschnitt (3.15) den dritten und vierten Schlitz (3.3, 3.4) und der zweite öffnende Kolbenabschnitt (3.16) den siebenten und achten Schlitz (3.7, 3.8) übergreift, wobei der zweite Schlitz (3.2) über einen Kanal (21) mit dem achten Schlitz (2.8) des Multiplexventils (2), der dritte Schlitz (3.2) über einen Kanal (19) mit der ersten Kupplung (10), der vierte Schlitz (3.4) über einen Kanal mit dem offenen Behälter (3.18), der fünfte Schlitz (3.5) über ein Kanal (22) mit dem zehnten Schlitz (2.10) des Multiplexventils (2) und der sechste Schlitz (3.6) über einen Kanal mit dem offenen Behälter (3.18) verbunden ist.

10. Ansteuereinrichtung nach Anspruch 9,
**dadurch gekennzeichnet, dass** der erste Schlitz (3.1) des Sicherheitsventils (3) mit dem Hydraulikflüssigkeitsbehälter (2.1) oder mit Systemdruck (p_{sys}) verbindbar ist, welcher im verbundenen Zustand entgegen der Kraft einer Feder (3.9) auf eine Stirnfläche (3.11) des Kolbens (3.19), diesen in die zweite Position verbringend, wirkt.

11. Ansteuereinrichtung nach Anspruch 10,
**dadurch gekennzeichnet, dass** ein Elektromagnetventil (12) zum Verbinden des ersten Schlitzes (3.1) des Sicherheitsventils (3) mit Systemdruck (p_{sys}) oder einem anderen vorgebbaren von Null verschiedenen Druck vorgesehen ist.

12. Ansteuereinrichtung nach Anspruch 11,
**dadurch gekennzeichnet, dass** das Elektromagnetventil (12) sowohl zum Verbinden des ersten Schlitzes (3.1) des Sicherheitsventils (3) als auch zum Verbinden des ersten Schlitzes (2.1) des Multiplexventils (2) mit dem Hydraulikflüssigkeitsbehälter (6) mit Systemdruck (p_{sys}) vorgesehen ist.

13. Verfahren zum Ansteuern einer ersten und einer zweiten hydraulisch betätigbaren Kupplung (11) eines Doppelkupplungsgetriebes eines Kraftfahrzeuges.
- bei dem die erste Kupplung (10) von einem ersten in einem ersten durch erste Kanäle (15,16,17,27,16, 21,19) gebildeten Hydraulikflüssigkeit führenden Pfad zu der ersten Kupplung (10) liegenden Kupplungsventil (8) durch Öffnen oder Schließen des Pfads hydraulisch betätigt wird,
- bei dem die zweite Kupplung (11) von einem zweiten in einem zweiten durch zweite Kanäle (15, 16, 17, 28, 25,24,22,20) gebildeten Hydraulikflüssigkeit führenden Pfad zu der zweiten Kupplung (12) liegenden Kupplungsventil (9) durch Öffnen oder Schließen des Pfads hydraulisch betätigt wird,
- bei dem der erste und der zweite Pfad in Abhängigkeit von einer Position (Drive, Reverse, Neutral, Parking) eines Fahrbereichswählhebels durch ein Ventil (1) geöffnet oder geschlossen werden, wobei in einer ersten Fahrbereichswählhebelposition (Reverse) der erste Pfad geöffnet und der zweite Pfad geschlossen wird,
**dadurch gekennzeichnet, dass**
- die ersten und zweiten Kanäle (15, 16, 17, 27, 25, 24, 21,19) bei Ausfall des ersten Kupplungsventils (8) derart miteinander verbunden werden, dass das zweite Kupplungsventil (9) in dem ersten Pfad liegt und dieses diesen ersten Pfad öffnet oder schließt.

14. Verfahren nach Anspruch 13,
**dadurch gekennzeichnet , dass** die Kupplungen (10, 11) vor dem Verbinden vollständig entleert werden.

## Claims

1. Control device for a first and a second hydraulically operated clutch (10, 11) of a dual clutch transmission of a motor vehicle,
- with a first clutch valve (8), situated in a first hydraulic fluid-ducting path to the first clutch (10) formed by first ducts (15, 16, 17, 27, 26, 21, 19) and serving to open or close this first path, intended for the hydraulic operation of the first clutch (10)
- with a second clutch valve (9), situated in a second hydraulic fluid-ducting path to the second clutch (11) formed by second ducts (15, 16, 17, 28, 25, 24, 22, 20) and serving to open or close this second path, intended for the hydraulic operation of the second clutch (11)
- with a valve (1) opening or closing the first and/or second path according to a position (Drive, Neutral, Reverse, Parking) of a speed range selector lever, the valve in a first speed range selector lever position (Reverse) opening the first path and closing the second path,
**characterized in that**
- a multiplex valve (2) is provided, which in the event of a failure of the first clutch valve (8) connects the first and second ducts (15, 16, 17, 27, 25, 24, 21, 19) together, in such a way that the second clutch valve (9) is situated in the first path and opens or closes this first path.

2. Control device according to Claim 1, **characterized in that** the multiplex valve (2) has a self-locking device (2.16a, 2.16b), which holds the multiplex valve (2) in the valve position in which the ducts (15, 16, 17, 27, 25, 24, 21, 19) are interconnected and in which the second clutch valve (9) is situated in the first path and opens or closes this path.

3. Control device according to Claim 2, **characterized in that** the self-locking device (2.16a, 2.16b) is operative only when the pressure of the hydraulic fluid exceeds a predefinable threshold value.

4. Control device according to any one of Claims 1 to 3, **characterized in that** the multiplex valve (2) has a piston (2.15) with five opening and four closing piston sections (2.17, 2.18, 2.19, 2.20, 2.21, 2.22, 2.23, 2.24, 2.25) guided in a control housing (2.0) having at least 13 ports (2.1, 2.2, 2.3, 2.4, 2.5, 2.6, 2.7, 2.8, 2.9, 2.10, 2.11, 2.12, 2.13), the piston (2.15) being selectively moveable into a first position in which the first opening piston section (2.21) only overlaps the first port (2.1), the second opening piston section (2.22) overlaps the fourth and fifth ports (2.4, 2.5), the third opening piston section (2.23) overlaps the seventh and eighth ports (2.7, 2.8), the fourth opening piston section (2.24) overlaps the ninth and tenth ports (2.9, 2.10) and the fifth opening piston section (2.25) overlaps the twelfth and thirteenth ports (2.12, 2.13), or into a second position in which the first opening piston section (2.21) overlaps the second and third ports (2.2, 2.3), the second opening piston section (2.22) overlaps the fifth and sixth ports (2.5, 2.6), the third opening piston section (2.23) overlaps the eighth and ninth ports (2.8, 2.9), the fourth opening piston section (2.24) overlaps the tenth and eleventh ports (2.10, 2.11) and the fifth opening piston section (2.25) overlaps the thirteenth port (2.13), and the second port (2.2) being connected via a duct (23) to the twelfth port (2.12), the third port 2.3) being connected via a duct (17) to a hydraulic fluid reservoir (6) at system pressure (p_{sys}), the fourth port (2.4) in the first speed range selector lever position (Reverse) being connected to an open reservoir (1.26), the fifth port (2.5) being connected to the inlet of the second clutch valve (9), the sixth port (2.6) being connected to the inlet Of the first clutch valve (8), the seventh port (2.7) being connected to the outlet of the first clutch valve (8), the eighth port (2.8) being connected to the duct (21, 19) leading to the first clutch (10), the ninth port (2.9) being connected to the outlet of the second clutch valve (9), the tenth port (2.10) being connected to the duct (22, 20) leading to the second clutch (11), the eleventh port (2.11) being connected to the open reservoir (2.25) and the thirteenth port (2.13) being connected to the open reservoir (2.26).

5. Control device according to Claim 4, **characterized in that** the first port (2.1) of the multiplex valve (2) in the first speed range selector lever position (Reverse) can be connected to the hydraulic fluid reservoir (6) at system pressure (p_{sys}), which in the connected state acts against the force of a spring (2.14) on a first end face (2.16a) of the piston (2.15), bringing the latter into the second position.

6. Control device according to Claim 5, **characterized in that** a solenoid valve (12) is provided for connecting the first port (2.1) of the multiplex valve (2) to the hydraulic fluid reservoir (6) at system pressure (p_{sys}).

7. Control device according to either of Claims 5 or 6, **characterized in that** the first closing piston section (2.17) has a second end face (2.16b) of the piston (2.15).

8. Control device according to any one of the preceding claims, **characterized in that** a safety valve (3) is provided for discharging the clutches (10, 11).

9. Control device according to Claim 8, **characterized in that** the safety valve (3) has a piston (3.19) with two opening and three closing piston sections (3.12, 3.13, 3.14, 3.15, 3.16) guided in a control housing (3.0) having eight ports (3.1, 3.2, 3.3, 3.4, 3.5, 3.6, 3.7, 3.8), the piston (3.19) being selectively moveable into a first position in which the first opening piston section (3.15) overlaps the second and third ports (3.2, 3.3) and the second opening piston section (3.16) overlaps the sixth port (3.6), or into a second position for unpressurized switching of the clutch, in which the first opening piston section (3.15) overlaps the third and fourth ports (3.3, 3.4) and the second opening piston section (3.16) overlaps the seventh and eighth ports (3.7, 3.8), the second port (3.2) being connected via a duct (21) to the eighth port (2.8) of the multiplex valve (2), the third port (3.2) being connected via a duct (19) to the first clutch (10), the fourth port (3.4) being connected via a duct to the open reservoir (3.18), the fifth port (3.5) being connected via a duct (22) to the tenth port (2.10) of the multiplex valve (2) and the sixth port (3.6) being connected via a duct to the open reservoir (3.18).

10. Control device according to Claim 9, **characterized in that** the first port (3.1) of the safety valve (3) can be connected to the hydraulic fluid reservoir (2.1) or to system pressure (p_{sys}), which in the connected state acts against the force of a spring (3.9) on an end face (3.11) of the piston (3.19), bringing the latter into the second position.

11. Control device according to Claim 10, **characterized in that** a solenoid valve (12) is provided for connecting the first port (3.1) of the safety valve (3) to system pressure (p_{sys}) or some other predefinable pressure other than zero pressure.

12. Control device according to Claim 11, **characterized in that** the solenoid valve (12) is intended both for connecting the first port (3.1) of the safety valve (3) and for connecting the first port (2.1) of the multiplex valve (2) to the hydraulic fluid reservoir (6) at system pressure (p_{sys}).

13. Method for controlling a first and a second hydraulically operated clutch (11) of a dual clutch transmission of a motor vehicle,
- in which the first clutch (10) is hydraulically operated by a first clutch valve (8), situated in a first hydraulic fluid-ducting path to the first clutch (10) formed by first ducts (15, 16, 17, 27, 16, 21, 19) by opening and closing of the path,
- in which the second clutch (11) is hydraulically operated by a second clutch valve (9), situated in a second hydraulic fluid-ducting path to the second clutch (11) formed by second ducts (15, 16, 17, 28, 25, 24, 22, 20) by opening and closing of the path,
- in which the first and the second path are opened or closed by a valve (1) according to a position (Drive, Reverse, Neutral, Parking) of a speed range selector lever, the first path being opened and the second path closed in a first speed range selector lever position (Reverse),
**characterized in that**
- in the event of a failure of the first clutch valve (8) the first and second ducts (15, 16, 17, 27, 25, 24, 21, 19) are interconnected in such a way that the second clutch valve (9) is situated in the first path and opens or closes this first path.

14. Method according to Claim 13, **characterized in that** the clutches (10, 11) are fully discharged prior to connection.

## Revendications

1. Dispositif de commande pour un premier et un deuxième embrayage (10, 11) actionnés de façon hydraulique sur un double mécanisme de transmission de véhicule automobile,
- avec une première soupape d'embrayage (8) située dans une première voie de guidage de liquide hydraulique formée par des premiers canaux (15, 16, 17, 27, 26, 21, 19) pour le premier embrayage (10), destinée à l'actionnement hydraulique du premier embrayage (10) et permettant d'ouvrir ou de fermer cette première voie,
- avec une deuxième soupape d'embrayage (9) située dans une deuxième voie de guidage de liquide hydraulique formée par des deuxièmes canaux (15, 16, 17, 27, 28, 25, 24, 22, 20) pour le deuxième embrayage (11), destinée à l'actionnement hydraulique du deuxième embrayage (11) et permettant d'ouvrir ou de fermer cette deuxième voie,
- avec une soupape (1) permettant d'ouvrir ou de fermer la première voie et/ou la deuxième voie en fonction de la position (conduite, neutre, marche arrière, stationnement) d'un levier de sélection de marche, qui dans une première position de levier de sélection de marche (marche arrière) ouvre la première voie et ferme la deuxième,
**caractérisé en ce que**
- une soupape multiplexe (2) est prévue pour relier ensemble les premiers et les deuxièmes canaux (15, 16, 17, 27, 25, 24, 21, 19) en cas de panne de la première soupape d'embrayage (8), de telle façon que la deuxième soupape d'embrayage (9) se trouve dans la première voie et qu'elle ouvre ou ferme cette première voie.

2. Dispositif de commande selon la revendication 1,
**caractérisé en ce que** la soupape multiplexe (2) comporte un dispositif de maintien automatique (2.16a, 2.16b), qui maintient la soupape multiplexe (2) dans la position de soupape reliant ensemble les canaux (15, 16, 17, 27, 25, 24, 21, 19), dans laquelle la deuxième soupape d'embrayage (9) se trouve dans la première voie et ouvre ou ferme cette voie.

3. Dispositif de commande selon la revendication 2,
**caractérisé en ce que** le dispositif de maintien automatique (2.16a, 2.16b) n'est actif que lorsque la pression du liquide hydraulique dépasse une certaine valeur de rapidité prédéfinie.

4. Dispositif de commande selon l'une des revendications 1 à 3,
**caractérisé en ce que** la soupape multiplexe (2) comporte un piston (2.15) avec cinq sections d'ouverture et quatre sections de fermeture (2.17, 2.18, 2.19, 2.20, 2.21, 2.22, 2.23, 2.24, 2.25), qui est introduit dans un boîtier de commande (2.0) comportant au moins 13 fentes (2.1, 2.2, 2.3, 2.4, 2.5, 2.6, 2.7, 2.8, 2.9, 2.10, 2.11, 2.12, 2.13), le piston (2.15) pouvant être mis dans une première position au choix, dans laquelle la première section d'ouverture du piston (2.21) s'engage par-dessus la première fente (2.1) uniquement, la deuxième section d'ouverture de piston (2.22) s'engage par-dessus la quatrième et la cinquième fente (2.4, 2.5), la troisième section d'ouverture de piston (2.23) s'engage par-dessus la septième et la huitième fente (2.7, 2.8), la quatrième section d'ouverture de piston (2.24) s'engage par-dessus la neuvième et la dixième fente (2.9, 2.10) et la cinquième section d'ouverture de piston (2.25) s'engage par-dessus la douzième et la treizième fente (2.12, 2.13), ou dans une deuxième position, dans laquelle la première section d'ouverture de piston (2.21) s'engage par-dessus la deuxième et la troisième fente (2.2, 2.3), la deuxième section d'ouverture de piston (2.22) s'engage par-dessus la cinquième et la sixième fente (2.5, 2.6), la troisième section d'ouverture de piston (2.23) s'engage par-dessus la huitième et la neuvième fente (2.8, 2.9), la quatrième section d'ouverture de piston (2.24) s'engage par-dessus la dixième et la onzième fente (2.10, 2.11) et la cinquième section d'ouverture de piston (2.25) s'engage par-dessus la treizième fente (2.13), dans laquelle la deuxième fente (2.2) est reliée à la douzième fente (2.12) par l'intermédiaire d'un canal (23), la troisième fente (2.3) est reliée à un récipient de liquide hydraulique (6) avec pression de système (P_{sys}) par l'intermédiaire d'un canal (17), la quatrième fente (2.4) est reliée à un récipient ouvert (1.26) dans la première position de sélection de marche (marche arrière), la cinquième fente (2.5) est reliée à l'entrée de la deuxième soupape d'embrayage (9), la sixième fente (2.6) est reliée à l'entrée de la première soupape d'embrayage (8), la septième fente (2.7) est reliée à la sortie de la première soupape d'embrayage (8), la huitième fente (2.8) est reliée au canal (21, 19) menant vers le premier embrayage (10), la neuvième fente (2.9) est reliée à la sortie de la deuxième soupape d'embrayage (9), la dixième fente (2.10) est reliée au canal (22, 20) menant vers le deuxième embrayage (11), la onzième fente (2.11) est reliée au récipient ouvert (2.25) et la treizième fente (2.13) est reliée au récipient ouvert (2.26).

5. Dispositif de commande selon la revendication 4,
**caractérisé en ce que** la première fente (2.1) de la soupape multiplexe (2) peut être reliée dans la première position de sélection de marche (marche arrière) au récipient de liquide hydraulique (6) avec pression de système (p_{sys}), qui à l'état relié agit contre la force d'un ressort (2.14) sur une première surface frontale (2.16a) du piston (2.15), en l'amenant dans la deuxième position.

6. Dispositif de commande selon la revendication 5,
**caractérisé en ce qu'**une soupape électromagnétique (12) est prévue pour relier la première fente (2.1) de la soupape multiplexe (2) à un récipient à liquide hydraulique (6) avec pression de système (Psys).

7. Dispositif de commande selon l'une des revendications 5 ou 6,
**caractérisé en ce que** la première section de fermeture de piston (2.17) comporte une deuxième surface frontale (2.16b) du piston (2.15).

8. Dispositif selon l'une des précédentes revendications,
**caractérisé en ce qu'**une soupape de sécurité (3) est prévue pour la vidange des embrayages (10, 11).

9. Dispositif de commande selon la revendication 8
**caractérisé en ce que** la soupape de sécurité (3) comporte un piston (3.19) avec deux sections d'ouverture et trois sections de fermeture (3.12, 3.13, 3.14, 3.15, 3.16), qui est introduit dans le boîtier de commande (3.0) possédant huit fentes (3.1, 3.2, 3.3, 3.4, 3.5, 3.6, 3.7, 3.8), le piston (3.19) pouvant être mis dans une première position au choix, dans laquelle la première section d'ouverture de piston (3.15) s'engage par-dessus la deuxième et la troisième fente (3.2, 3.3) et la deuxième section d'ouverture de piston (3. 16) s'engage par-dessus la sixième fente (3.6), ou dans une deuxième position pour la mise hors pression de l'embrayage, dans laquelle la première section d'ouverture de piston (3.15) s'engage par-dessus la troisième et la quatrième fente (3.3, 3.4) et la deuxième section d'ouverture de piston (3.16) s'engage par-dessus la septième et la huitième fente (3.7, 3.8), dans laquelle la deuxième fente (3.2) est reliée à la huitième fente (2.8) de la soupape multiplexe par l'intermédiaire d'un canal (21), la troisième fente (3.3) est reliée au premier embrayage (10) par l'intermédiaire d'un canal (19), la quatrième fente (3.4) est reliée au récipient ouvert (3.18), la cinquième fente (3.5) est reliée à la dixième fente (2.10) de la soupape multiplexe (2) par l'intermédiaire d'un canal (22) et la sixième fente (3.6) est reliée au récipient ouvert (3.18) par l'intermédiaire d'un canal.

10. Dispositif de commande selon la revendication 9,
**caractérisé en ce que** la première fente (3.1) de la soupape de sécurité (3) peut être reliée au récipient de liquide hydraulique (2.1) ou à la pression système (P_{sys}), qui à l'état relié agit contre la force d'un ressort (3.9) sur une surface frontale (3.11) du piston (3.19) en l'amenant ainsi dans la deuxième position.

11. Dispositif de commande selon la revendication 10,
**caractérisé en ce qu'**une soupape électromagnétique (12) est prévue pour relier la première fente (3.1) de la soupape de sécurité (3) à la pression système (p_{sys}) ou à une autre pression définie différente de zéro.

12. Dispositif selon la revendication 11,
**caractérisé en ce que** la soupape électromagnétique (12) est prévue pour relier aussi bien la première fente (3.1) de la soupape de sécurité (3) que la première fente (2.1) de la soupape multiplexe (2) au récipient à liquide hydraulique (6) avec pression système (P_{sys}).

13. Dispositif de commande pour un premier et un deuxième embrayage (11) actionnés de façon hydraulique dans un double mécanisme de transmission d'un véhicule automobile,
- dans lequel le premier embrayage (10) est actionné de façon hydraulique par une première soupape d'embrayage (8), qui est située dans une première voie de guidage de liquide hydraulique formée par des premiers canaux (15, 16, 17, 27, 26, 21, 19) allant vers le premier embrayage (10), grâce à l'ouverture ou à la fermeture de la voie,
- dans lequel le deuxième embrayage (11) est actionné de façon hydraulique par une deuxième soupape d'embrayage (9) située dans une deuxième voie de guidage de liquide hydraulique formée par des deuxièmes canaux (15, 16, 17, 28, 25, 24, 22, 20) allant vers le deuxième embrayage (12), grâce à l'ouverture ou à la fermeture de la voie,
- dans lequel la première voie et la deuxième voie sont ouvertes ou fermées par une soupape (1) en fonction de la position (conduite, neutre, marche arrière, stationnement) d'un levier de sélection de marche, la première voie étant ouverte et la deuxième voie étant fermée dans une première position de levier de sélection de marche (marche arrière),
**caractérisé en ce que**
- les premiers et deuxièmes canaux (15, 16, 17, 27, 25, 24, 21, 19) sont reliés de telle façon en cas de panne de la première soupape d'embrayage (8), que la deuxième soupape d'embrayage (9) se trouve dans la première voie et qu'elle ouvre ou ferme cette première voie.

14. Procédé selon la revendication 13,
**caractérisé en ce que** les embrayages (10, 11) sont entièrement vidés d'effectuer les liaisons.
